# EUROPÄISCHE PATENTSCHRIFT

(11) **EP 2 283 328 B1**
(45) Veröffentlichungstag und Bekanntmachung des Hinweises auf die Patenterteilung: **28.02.2018**
(21) Anmeldenummer: 09757511.2
(22) Anmeldetag: 02.06.2009
(51) Int. Cl.: G01F 1/84

(54) **VORRICHTUNG ZUR BESTIMMUNG UND/ODER ÜBERWACHUNG EINES STRÖMUNGSPARAMETERS**
DEVICE FOR DETERMINING AND/OR MONITORING A FLOW PARAMETER
DISPOSITIF DE DÉTERMINATION ET/OU DE SURVEILLANCE D'UN PARAMÈTRE D'ÉCOULEMENT

(30) Priorität: 04.06.2008 DE 102008002217
(43) Veröffentlichungstag der Anmeldung: 16.02.2011
(73) Patentinhaber: Endress+Hauser Flowtec AG, 4153 Reinach (CH)
(72) Erfinder: KEITA, Mamadi, CH-4053 Basel (CH); TOUZIN, Mike, 79585 Steinen (DE)
(74) Vertreter: Andres, Angelika Maria
(86) Internationale Anmeldenummer: PCT/EP2009/056728
(87) Internationale Veröffentlichungsnummer: WO 2009/147130

(56) Entgegenhaltungen:
- WO-A-01/65213
- WO-A-02/44660
- WO-A-98/38479
- WO-A-2008/059262
- JP-A- H09 133 564

## Beschreibung

Die Erfindung bezieht sich auf eine Vorrichtung zur Bestimmung und/oder Überwachung mindestens eines Strömungsparameters eines Mediums, wobei das Medium mindestens ein Messrohr im Wesentlichen entlang einer imaginären Strömungsachse durchströmt, wobei mindestens ein Anregungswandlerelement vorgesehen ist, welches ausgehend von einem Anregungssignal das Messrohr zu mechanischen Schwingungen anregt, und wobei mindestens ein Empfangswandlerelement vorgesehen ist, welches mechanische Schwingungen des Messrohrs als Empfangssignal empfängt.

Bei dem Strömungsparameter handelt es sich beispielsweise um den Durchfluss oder den Massedurchfluss des Mediums. Das Medium ist beispielsweise eine Flüssigkeit, ein Gas, allgemein ein Fluid oder ein Schüttgut. Weiterhin handelt es sich bei dem Medium beispielsweise um eine Mischung aus Flüssigkeit, Gas oder Schüttgut.

Im Stand der Technik ist es bekannt, Strömungsparameter, wie z.B. die Durchflussrate eines Mediums durch ein Messrohr unter Ausnutzung des Coriolis-Effekts zu bestimmen. Hierfür wird das Messrohr zu mechanischen Schwingungen angeregt. An einer zum Anregungsort unterschiedlichen Stelle werden die Schwingungen des Messrohres aufgenommen. Aus der Phasendifferenz zwischen dem Anregungs- und dem Empfangssignal bzw. der damit verbundenen Laufzeit lässt sich dann der Strömungsparameter ermitteln.

Im Stand der Technik sind unterschiedliche Konstruktionen für das vom Medium zu durchströmende Messrohr bekannt. So gibt es gekrümmte oder gerade Rohre. Weiterhin besteht das Messrohr beispielsweise wie aus der Druckschrift WO01/65213A1 oder aus der Druckschrift WO2008/059262 bekannt aus einem Einzelrohr oder beispielsweise aus einem Doppel- oder Mehrfachrohr.

Insbesondere bei der Verwendung von mehreren Rohren ergibt sich das Problem des Druckabfalls, wenn das Medium aus einem Rohr mit einem größeren Durchmesser in den Bereich der Doppelrohre mit einem geringeren Durchmesser übergeht. Doppelrohre hingegen haben gegenüber Einzelrohren den Vorteil, dass sie symmetrisch sind und somit leichter balanciert werden können, was die Messgenauigkeit erhöht.

Der Erfindung liegt die Aufgabe zugrunde, eine Vorrichtung zur Bestimmung und/oder Überwachung eines Strömungsparameters vorzuschlagen, welche über eine Messeinheit verfügt, welche die Problematik des Druckabfalls vermeidet und gleichzeitig möglichst symmetrisch und somit gut auszubalancieren ist.

Die Aufgabe wird erfindungsgemäß dadurch gelöst, dass mindestens eine Trenneinheit vorgesehen ist, und dass die Trenneinheit derartig ausgestaltet und in dem Messrohr angeordnet ist, dass sich in dem Messrohr mindestens zwei Teilmessrohre ergeben, welche mindestens zwei Teilmessrohre das Medium im Wesentlichen entlang der imaginären Strömungsachse durchströmt. Das Messrohr dient insbesondere der Messung des Strömungsparameters (z.B. Volumen- oder Massendurchfluss oder Dichte des das Messrohr durchströmenden Mediums) über Ausnutzung des Coriolis-Messprinzips. Das Messrohr ist erfindungsgemäß durch eine Trenneinheit quasi zweigeteilt, d.h. das Medium strömt durch die zwei Teilmessrohre, welche im Wesentlichen den Innenquerschnitt des Messrohres repräsentieren. Der Druckabfall wird somit dadurch behoben, dass das Medium in das Messrohr - bis auf den Querschnitt der Trenneinheit - über den vollen Querschnitt geführt wird. Da keine Verengung stattfindet, ergibt sich auch kein Druckabfall. In einer Ausgestaltung ist genau ein Messrohr vorgesehen. Das Messrohr wird in einer Ausgestaltung ohne Flansche in eine Rohrleitung bzw. in ein System von Rohren, welche das Medium führen, eingebracht.

Eine Ausgestaltung sieht vor, dass die Trenneinheit derartig ausgestaltet und in dem Messrohr angeordnet ist, dass die mindestens zwei Teilmessrohre im Wesentlichen das gleiche Volumen haben, welches das Medium durchströmt. Das Medium durchströmt somit in beiden Teilmessrohren das gleiche Innenvolumen. Mit anderen Worten: Die Trenneinheit ist derartig ausgestaltet und im Messrohr angeordnet, dass die Querschnitte der Teilmessrohre in einer Ebene senkrecht zur Strömungsachse im Wesentlichen gleich sind.

Eine Ausgestaltung beinhaltet, dass es sich bei der Trenneinheit im Wesentlichen um mindestens eine Platte einer vorgebbaren Dicke handelt, welche entlang eines Innendurchmessers des Messrohrs angeordnet ist.

Eine Ausgestaltung sieht vor, dass es sich bei der Trenneinheit im Wesentlichen um mindestens zwei Platten handelt, welche einen vorgebbaren Abstand zueinander aufweisen. In dieser Ausgestaltung besteht somit die Außenseite jedes Teilmessrohr quasi aus einem Abschnitt des eigentlichen Messrohrs und einer Platte. In einer Ausgestaltung sind die beiden Platten so ausgestaltet und einander zugewandt, dass die Messrohr-Abschnitte der Teilmessrohre wieder einen rohrähnlichen Außenumfang ergeben. Je nach der Ausgestaltung des Abstands zwischen den Platten kann sich dabei auch eine ovale Form ergeben.

Eine Ausgestaltung sieht vor, dass das Messrohr im Wesentlichen zylindrisch ausgestaltet ist. In einer Ausgestaltung ist das Messrohr entlang der imaginären Strömungsachse gerade ausgestaltet und weist somit keinerlei Krümmungen auf.

Eine Ausgestaltung beinhaltet, dass die äußere Dicke der Trenneinheit kleiner ist als die Wandstärke des Messrohrs. In dieser Ausgestaltung ist die Trenneinheit somit dünn gegenüber der Stärke des Messrohrs.

Eine Ausgestaltung beinhaltet, dass das Messrohr einlauf- und/oder auslaufseitig frei von Flanschen ist. Beim dem Messrohr handelt es sich somit um einen so genannten Wafer, welcher zwischen die Flansche eines Rohrsystems eingeklemmt wird. Das Messrohr selbst hat dabei in einer Ausgestaltung keine Flansche, d.h. weder einlauf-, noch auslaufseitig. Die Erfindung beinhaltet, dass mindestens das Empfangswandlerelement und/oder das Anregungswandlerelement zumindest teilweise in der Trenneinheit angeordnet sind/ist.

Eine Ausgestaltung sieht vor, dass das Messrohr einstückig ausgestaltet ist. In diesem einstückigen Messrohr ist somit die Trenneinheit bereits ein Bestandteil oder wird in einem Verfahrensschritt eingebracht. Mit anderen Worten: Das Messrohr ist in einer Ausgestaltung vor dem Einbringen der Trenneinheit einstückig oder das Messrohr ergibt sich anschließend, z.B. in Verbindung mit der Trenneinheit als einstückig. Alternativ dazu besteht das Messrohr aus zwei Teilstücken.

Eine Ausgestaltung beinhaltet, dass das Messrohr im Wesentlichen aus mindestens zwei Rohrhälften besteht. In Verbindung mit der Trenneinheit ergibt sich dann das vollständige Messrohr. Die Röhrhälften sind dabei im Wesentlichen halbschalenähnlich ausgestaltet.

Die Erfindung wird anhand der nachfolgenden Zeichnungen näher erläutert. Es zeigt:
Fig. 1: eine räumliche Darstellung eines nicht zur Erfindung gehörenden Messrohres,
Fign. 2a, 2b und 2c: Querschnitte von drei unterschiedlichen Ausgestaltungen eines Messrohrs,
Fig. 3: ein Querschnitt einer Hälfte eines erfindungsgemäßen Messrohrs, und
Fig. 4: ein Querschnitt einer Anordnung eines erfindungsgemäßen Messrohrs mit Anrege- und Empfangswandlerelementen.

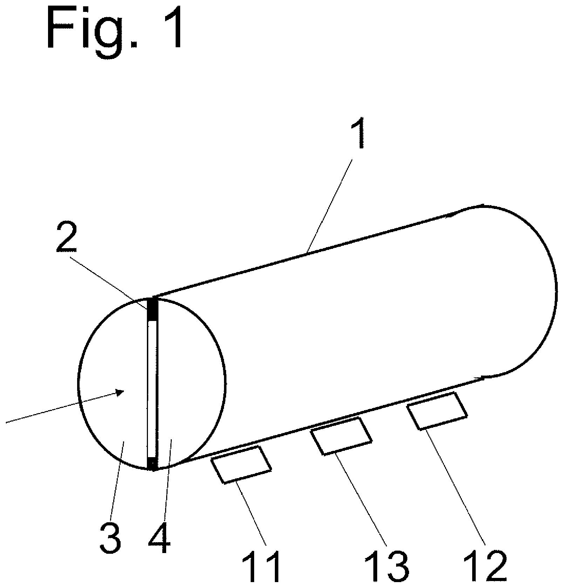

In der Fig. 1 ist eine räumliche Darstellung eines nicht zur Erfindung gehörenden Messrohres 1 zu sehen. Das hier zylindrisch und gerade ausgestaltete Rohr 1 wird von dem - hier nicht dargestellten - Medium in Pfeilrichtung entlang einer imaginären Strömungsachse durchströmt. Hierfür ist das Rohr 1 beispielsweise aus- und einlassseitig mit einem Rohrsystem verbunden. Wie hier zu sehen, ist das Rohr 1 frei von Flanschen, d.h. es weist selbst keine Flansche auf.

Das Rohr 1 wird durch das Anregungswandlerelement 13 zu mechanischen Schwingungen angeregt, welche wiederum von den Empfangswandlerelementen 11, 12 empfangen und in elektrische Empfangssignale umgewandelt werden. Aus der Phasendifferenz zwischen diesen beiden Signalen und dem Anregungssignal lässt sich beispielsweise unter Ausnutzung des Coriolis-Effekts der Durchfluss des Mediums als dessen Strömungsparameter ermittelt. Weiterhin ist auch die Bestimmung der Dichte oder des Massedurchflusses möglich.

In dem erfindungsgemäßen Messrohr 1 befindet sich eine Trenneinheit 2, welche das Rohr 1 in zwei Teilmessrohre 3, 4 teilt. Bei der Trenneinheit 2 handelt es sich hier um eine Platte, welche das Rohr 1 vorzugsweise auf seiner ganzen Länge durchteilt, d.h. die Tiefe der Trenneinheit 2 ist vorzugsweise im Wesentlichen gleich der Länge des Rohres 1. Die Länge der Trenneinheit 2 ist vorzugsweise im Wesentlichen gleich dem Innendurchmesser des Messrohrs 1. Die Breite bzw. Dicke der Trenneinheit 1 ist vorgebbar und definiert einen gewissen Totraum, welcher nicht vom Medium durchflossen wird. Dieser Zwischenraum wird - wie in einer folgenden Abbildung demonstriert ist - beispielsweise für die Unterbringung der Schwingungswandler verwendet, d.h. der Zwischenraum in der Trenneinheit 2 wird weiteren konstruktiven Aufgaben zugeführt. Die als Platte ausgestaltete Trenneinheit 2 kann dabei massiv ausgestaltet sein oder wie in der Fig. 1 dargestellt selbst wiederum einen Hohlraum aufweisen.

Durch die Trenneinheit 2 wird der Zylinder des Messrohres 1 in zwei Halbschalen aufgeteilt, welche vorzugsweise das gleiche Durchströmungsvolumen aufweisen. Somit lässt sich auch ein Druckabfall vermeiden, wenn der Durchmesser des Messrohrs 1 gleich dem oder zumindest nicht kleiner als der Durchmesser des Rohres ist, welches das Medium dem Messrohr zuführt und welches somit auch mit dem Messrohr 1 verbunden ist.

Ein Verfahren zur Herstellung eines Messrohrs 1 für die Bestimmung und/oder Überwachung mindestens eines Strömungsparameters eines Mediums, welche das Messrohr 1 durchströmt, besteht dabei darin, dass ein im Wesentlichen zylindrisch ausgestaltetes Rohr senkrecht zu einem Rohrquerschnitt in zwei Teile getrennt wird, und dass zwischen die zwei Teile eine Trenneinheit eingefügt wird. In einer weiteren Ausgestaltung wird die Trenneinheit in das bestehende einstückige Messrohr eingebracht. In einer alternativen Ausgestaltung besteht das Messrohr aus zwei Halbschalen, zwischen denen die Trenneinheit angeordnet ist, wobei die Trenneinheit wiederum aus zwei Teileinheiten besteht, welche gegebenenfalls einen gewissen Abstand zueinander aufweisen. Diese Teileinheiten sind dabei entweder miteinander verbunden oder voneinander unabhängig.

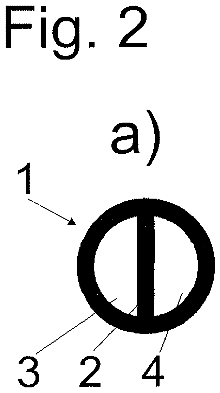

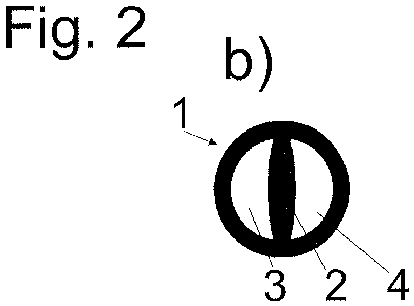

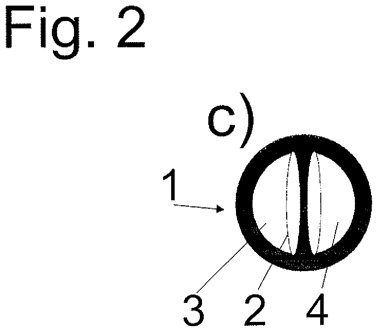

Die drei Abbildungen Fig. 2a, 2b und 2c zeigen Varianten für die Ausgestaltung der Trenneinheit, durch welche sich unterschiedliche Querschnitte des Messrohres 1 bzw. der Teilmessrohre 3, 4 ergeben.

In der Fig. 2a weist die Trenneinheit 2 eine durchgehend gleichmäßige Wandstärke bzw. Dicke auf. Somit entspricht die Trenneinheit 2 - in dieser Ausgestaltung der Fig. 2a - einem mit einer gewissen Dicke ausgeführten Innendurchmesser des Messrohres 1. Durch diesen verdickten Innendurchmesser wird das Rohr 1 in die beiden Teilmessrohre 3, 4 geteilt.

In der Fig. 2b weist die Trenneinheit 2 eine bauchige Ausgestaltung auf, d.h. die Dicke in der Mitte der Trenneinheit 2 ist größer als die Dicke in Richtung Innenwandung des Messrohres 1. Die Trenneinheit 2 ist somit konkav ausgestaltet.

Eine konvexe Variante zeigt die Fig. 2c, in welcher die Trenneinheit 2 in ihrer Mitte eine geringere Dicke bzw. Wandstärke aufweist.

In einer weiteren - hier nicht dargestellten - Ausgestaltung ist die Trenneinheit 2 entlang des Messrohres 1, d.h. entlang der imaginären Strömungsachse unterschiedlich ausgestaltet, so dass beispielsweise auch die Wandstärke der Trenneinheit 2 entlang des Messrohres 1 nicht konstant ist, sondern variiert.

Die Trenneinheit ist somit in einer Querschnittsebene des Messrohrs bzw. in einer Ebene senkrecht auf der imaginären Strömungsachse eben oder sie weist eine Kontur auf oder sie hat eine einheitliche Dicke oder eine variierende Dicke. Entsprechend kann auch die Trenneinheit längs der imaginären Strömungsachse jeweils identisch oder unterschiedlich ausgestaltet sein.

Im Allgemeinen kann die Dicke der Trenneinheit 2 unterschiedlich sein zur Wandstärke des Messrohres 1. Die Trenneinheit 2 ist dabei in den dargestellten Varianten jeweils massiv. In dazu alternativer Form sind auch in der Trenneinheit 2 Aussparungen oder Leerräume vorhanden.

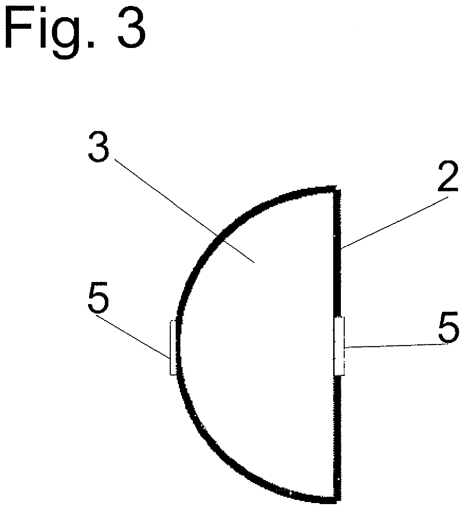

In der Fig. 3 ist eine Hälfte eines Messrohres 1 in Gestalt des Teilmessrohres 3 dargestellt. Das zweite Teilmessrohr, welches hier nicht dargestellt ist, ist dabei vorzugsweise gleichartig ausgestaltet und weiterhin vorzugsweise spiegelsymmetrisch zum hier gezeigten Teilmessrohr 3 angeordnet. Das Schwingungsverhalten des Teilmessrohrs 3 ist durch zwei Versteifungselemente 5 durch einen Eingriff auf die Steifigkeit der Trenneinheit 2 bzw. des das Teilmessrohr 3 umfassenden Abschnitts des Messrohres 1 eingestellt. Dabei handelt es sich bei dem Versteifungselement 5 beispielsweise jeweils um einen Steg: einen am äußeren Rand des Messrohrs 1 und einen an der Trenneinheit 2.

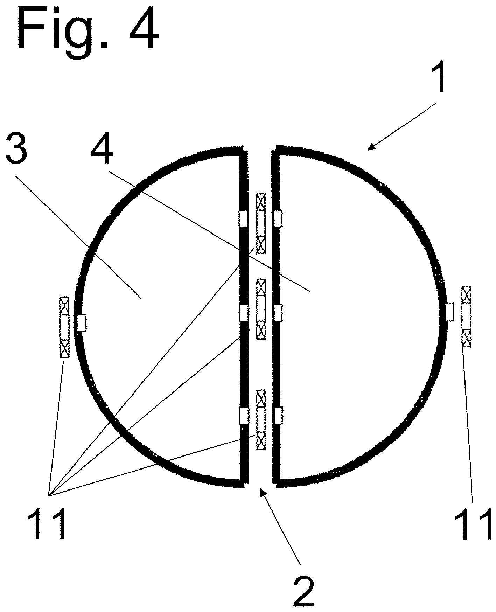

In der Fig. 4 besteht die Trenneinheit 2 im Wesentlichen aus zwei Platten einer vorgebbaren Wandstärke, welche einen ebenfalls vorgebbaren Abstand zueinander aufweisen. Für das Messrohr 1 als Ganzes ergibt sich damit ein ovaler Querschnitt, der dabei jedoch weiterhin aus zwei Kreishälften gebildet wird. Beim Übergang zum das Medium führenden Rohrsystem werden die Teilrohre dann wieder passend zusammengeführt. Dargestellt sind insgesamt fünf Empfangswandlerelemente 11, welche an dieser Stelle des Messrohres 1 die Schwingungen des Messrohres 1 aufnehmen und in elektrische Signale umwandeln. Die einzelnen Empfangswandierelemente 11 bestehen dabei erfindungsgemäß jeweils aus einem Magneten, welcher an dem Messrohr 1 bzw. an der Trenneinheit 2 befestigt ist und welcher durch die Schwingungen des Messrohres 1 im Magnetfeld einer Spule bewegt wird. In einer weiteren - hier nicht dargestellten - Variante sind die beiden "Teilplatten" der Trenneinheit 2 miteinander verbunden bzw. mechanisch miteinander gekoppelt.

Durch die Trenneinheit 2 ergeben sich somit mehr Möglichkeiten, um die Wandlerelemente für das Erzeugen bzw. Detektieren der Schwingungen zu positionieren. Weiterhin kann in der Trenneinheit 2 auch ein Element zum Erzeugen eines Druckausgleichs vorgesehen sein. Weiterhin ist das Messrohr 1 auch von einem - hier nicht dargestellten -- Gehäuse umgeben, welches beispielsweise selbst rohrförmig ist.

### Bezugszeichenliste

- 1: Messeinheit
- 2: Trenneinheit
- 3: Teilmessrohr
- 4: Teilmessrohr
- 5: Versteifungselement
- 11: Empfangswandlerelement
- 12: Empfangswandlerelement
- 13: Anregungswandlerelement

## Patentansprüche

1. Vorrichtung zur Bestimmung und/oder Überwachung mindestens eines Strömungsparameters eines Mediums,
wobei das Medium mindestens ein Messrohr (1) im Wesentlichen entlang einer imaginären Strömungsachse durchströmt,
wobei mindestens ein Anregungswandlerelement (13) vorgesehen ist, weiches ausgehend von einem Anregungssignal das Messrohr (1) zu mechanischen Schwingungen anregt,
wobei mindestens ein Empfangswandlerelement (11, 12) vorgesehen ist, welches mechanische Schwingungen des Messrohrs (1) als Empfangssignal empfängt,
und wobei mindestens eine Trenneinheit (2) vorgesehen ist, die derartig ausgestaltet und in dem Messrohr (1) angeordnet ist, dass sich in dem Messrohr (1) mindestens zwei Teilmessrohre (3, 4) ergeben, welche mindestens zwei Teilmessrohre (3, 4) das Medium im Wesentlichen entlang der imaginären Strömungsachse durchströmt,
**dadurch gekennzeichnet,**
**dass** mindestens das Empfangswandlerelement (11, 12) und/oder das Anregungswandlerelement (13) zumindest teilweise in der Trenneinheit (2) angeordnet sind/ist.

2. Vorrichtung nach Anspruch 1,
**dadurch gekennzeichnet,**
**dass** die Trenneinheit (2) derartig ausgestaltet und in dem Messrohr (1) angeordnet ist, dass die mindestens zwei Teilmessrohre (3, 4) im Wesentlichen das gleiche Volumen haben, welches das Medium durchströmt.

3. Vorrichtung nach Anspruch 1 oder 2,
**dadurch gekennzeichnet,**
**dass** es sich bei der Trenneinheit (2) im Wesentlichen um mindestens eine Platte einer vorgebbaren Dicke handelt, welche entlang eines Innendurchmessers des Messrohrs (1) angeordnet ist.

4. Vorrichtung nach einem der Ansprüche 1 bis 3,
**dadurch gekennzeichnet,**
**dass** es sich bei der Trenneinheit (2) im Wesentlichen um mindestens zwei Platten handelt, welche einen vorgebbaren Abstand zueinander aufweisen.

5. Vorrichtung nach einem der Ansprüche 1 bis 4,
**dadurch gekennzeichnet,**
**dass** das Messrohr (1) im Wesentlichen zylindrisch ausgestaltet ist.

6. Vorrichtung nach einem der Ansprüche 1 bis 5,
**dadurch gekennzeichnet,**
**dass** die äußere Dicke der Trenneinheit (2) kleiner ist als die Wandstärke des Messrohrs (1).

7. Vorrichtung nach einem der Ansprüche 1 bis 6,
**dadurch gekennzeichnet,**
**dass** das Messrohr (1) einlauf- und/oder auslaufseitig frei von Flanschen ist.

8. Vorrichtung nach einem der vorherigen Ansprüche,
**dadurch gekennzeichnet,**
**dass** das Messrohr (1) einstückig ausgestaltet ist *{****ursprünglicher Anspruch 9}*.**

9. Vorrichtung nach einem der Ansprüche 1 bis 7,
**dadurch gekennzeichnet,**
**dass** das Messrohr (1) im Wesentlichen aus mindestens zwei Rohrhälften besteht.

## Claims

1. Apparatus for determining and/or monitoring at least one flow parameter of a medium, wherein the medium flows through at least one measuring tube (1) essentially along an imaginary flow axis,
wherein at least one excitation transducer element (3) is provided, which, on the basis of an excitation signal, causes the measuring tube (1) to perform mechanical vibrations,
wherein at least one reception transducer element (11, 12) is provided which receives mechanical vibrations of the measuring tube (1) as a reception signal, and wherein at least one partition unit (2) is provided, which is designed in such a way and is arranged in the measuring tube (1) in such a way that at least two sub-measuring tubes (3, 4) result in the measuring tube (1), wherein the medium essentially flows through said sub-measuring tubes (3, 4) along the imaginary flow axis,
**characterized in that**
at least the reception transducer element (11, 12) and/or the excitation transducer element (13) are/is arranged at least partially in the partition unit (2).

2. Apparatus as claimed in Claim 1,
**characterized in that**
the partition unit (2) is designed in such a way and is arranged in the measuring tube (1) in such a way that the at least two sub-measuring tubes (3, 4) essentially have the same volume through which the medium flows.

3. Apparatus as claimed in Claim 1 or 2,
**characterized in that**
the partition unit (2) is essentially at least one plate of a predefinable thickness, which is arranged along an inner diameter of the measuring tube (1).

4. Apparatus as claimed in one of the Claims 1 to 3,
**characterized in that**
the partition unit (2) is essentially at least two plates which are at a predefinable distance from one another.

5. Apparatus as claimed in one of the Claims 1 to 4,
**characterized in that**
the measuring tube (1) is essentially cylindrical in shape.

6. Apparatus as claimed in one of the Claims 1 to 5,
**characterized in that**
the outer thickness of the partition unit (2) is less than the wall thickness of the measuring tube (1).

7. Apparatus as claimed in one of the Claims 1 to 6,
**characterized in that**
the measuring tube (1) is free from flanges on the inlet side and/or on the outlet side.

8. Apparatus as claimed in one of the previous claims,
**characterized in that**
the measuring tube is designed as one piece (original Claim 9).

9. Apparatus as claimed in one of the Claims 1 to 7,
**characterized in that**
the measuring tube is essentially made from at least two tube halves.

## Revendications

1. Dispositif destiné à la détermination et/ou la surveillance d'au moins un paramètre d'écoulement d'un produit,
pour lequel le produit s'écoule au moins dans un tube de mesure (1) pour l'essentiel le long d'un axe d'écoulement imaginaire,
pour lequel est prévu au moins un élément de convertisseur d'excitation (13), lequel fait entrer à partir d'un signal d'excitation le tube de mesure (1) en vibrations mécaniques,
pour lequel est prévu au moins un élément de convertisseur de réception (11, 12), lequel reçoit les vibrations mécaniques du tube de mesure (1) en tant que signal de réception,
et pour lequel est prévue au moins une unité de séparation (2), laquelle est disposée dans le tube de mesure (1) et est conçue de telle sorte qu'il en résulte dans le tube de mesure (1) au moins deux tubes de mesure partiels (3, 4), dans lesquels le produit s'écoule pour l'essentiel le long d'un axe d'écoulement imaginaire,
**caractérisé**
**en ce qu'**au moins l'élément de convertisseur de réception (11, 12) et/ou l'élément de convertisseur d'excitation (13) sont/est disposé(s) au moins partiellement dans l'unité de séparation (2).

2. Dispositif selon la revendication 1,
**caractérisé**
**en ce que** l'unité de séparation (2) est disposée dans le tube de mesure (1) et est conçue de telle sorte que les au moins deux tubes de mesure partiels (3, 4) présentent pour l'essentiel le même volume parcouru par le produit.

3. Dispositif selon la revendication 1 ou 2,
**caractérisé**
**en ce que** concernant l'unité de séparation (2), il s'agit pour l'essentiel d'au moins une plaque d'épaisseur prédéfinissable, laquelle est disposée le long d'un diamètre intérieur du tube de mesure (1).

4. Dispositif selon l'une des revendications 1 à 3,
**caractérisé**
**en ce que** concernant l'unité de séparation (2), il s'agit pour l'essentiel d'au moins deux plaques présentant un écartement prédéfinissable.

5. Dispositif selon l'une des revendications 1 à 4,
**caractérisé**
**en ce que** le tube de mesure (1) est pour l'essentiel cylindrique.

6. Dispositif selon l'une des revendications 1 à 5,
**caractérisé**
**en ce que** l'épaisseur extérieure de l'unité de séparation (2) est inférieure à l'épaisseur de paroi du tube de mesure (1).

7. Dispositif selon l'une des revendications 1 à 6,
**caractérisé**
**en ce que** le tube de mesure (1) est exempt de brides côté entrée et/ou côté sortie.

8. Dispositif selon l'une des revendications précédentes,
**caractérisé**
**en ce que** le tube de mesure (1) est conçu en une seule pièce.

9. Dispositif selon l'une des revendications 1 à 7,
**caractérisé**
**en ce que** le tube de mesure (1) se compose pour l'essentiel d'au moins deux demi-tubes.
